# EUROPEAN PATENT SPECIFICATION

(11) **EP 3 315 333 B1**
(45) Date of publication and mention of the grant of the patent: **12.02.2020**
(21) Application number: 16196729.4
(22) Date of filing: 01.11.2016
(51) Int. Cl.: B60D 3/00, B60D 1/01, B60D 1/00

(54) **TOWING HITCH ASSEMBLY**
ANHÄNGEKUPPLUNGSVORRICHTUNG
ENSEMBLE D'ATTELAGE DE REMORQUAGE

(43) Date of publication of application: 02.05.2018
(73) Proprietor: Toyota Material Handling Manufacturing Sweden AB, 595 81 MJÖLBY (SE)
(72) Inventor: ARVIDSSON KLINT, Jakob, 595 51 Mjölby (SE)
(74) Representative: Zacco Sweden AB

(56) References cited:
- EP-A1- 3 090 888
- US-A- 2 929 642

## Description

The present invention relates to a towing hitch assembly according to any of the claims 1-13, a carrier vehicle according to claim 14, and a towing system according to claim 15.

### BACKGROUND

In industrial manufacturing facilities it has been more and more common to use auto guided vehicles for transports within the industrial manufacturing facility. The transports can for example be of elements to be assembled at an assembly line or it could be waste products to be disposed of in another part of the facility. The aim of using auto guided vehicles is to increase efficiency and to reduce man hours for simple tasks. The auto guided vehicles can either carry the transported goods by themselves or use another vehicle for carrying the goods. In the latter case some sort of wagon is often used. The document EP 3 090 888 A1 discloses a towing hitch assembly according to the preamble of claim 1.

### BRIEF DESCRIPTION OF THE INVENTION

When an auto guided vehicle is used in a towing situation there is a further need to reduce man hours by avoiding human interaction for connection and disconnection of a carrier vehicle from a towing vehicle. In general this can be achieved by having a mechanism on the towing vehicle that disengages a connecting recess on a carrier vehicle. However it has been found that the manoeuvring of the combined system of a towing vehicle and a carrier vehicle can be limited. It has also been discovered that when an auto guide vehicle engages a carrier vehicle an oscillation can occur when the auto guide vehicle makes small direction corrections. In order to solve at least one of the problems above it is suggested a towing hitch assembly according to claim 1.

The effect of the towing hitch assembly designed as in claim 1 is that an automated towing vehicle can be engaged in at least two positions and one of these positions can be disengaged, or move together with the towing vehicle as engaged, when needed such that manoeuvring of the automated guide vehicle can be performed without pushing the carrier vehicle unnecessary in transversal direction. This will avoid the oscillations as discussed.

A further aspect is described by a towing hitch assembly wherein the connecting member is connected to the first link member by means of a vertical axis, such that the first link member can pivot in relation to the connecting member and thereby move the grip member with guiding from the second guide member. The advantages of this subject matter is that the connecting member and the first link member can give a movement of the grip member that does give large movements in longitudinal direction of the towing hitch assembly, i.e. a large rotating movement of the grip member at the end of the link member, which would consume space and possibly need modifications of the carrier vehicle.

The towing hitch assembly according to claim 1 further comprises a second link member connected to the connecting member and a second grip member connected to the second link member and further a third guide member connected to the second grip member, wherein the second grip member can engage the towing vehicle at a third position. The advantage of this subject matter is that a further position of the towing vehicle can be engaged and an even better operation to avoid the mentioned oscillations is achieved. Three positions give an engagement that is a very stable engagement between the towing hitch assemblies.

A further aspect is described by a towing hitch assembly according to claim 1 wherein the second link member and second grip member are positioned on the opposite side of a line that extends along and out of the first guide member, preferably a central symmetry line central symmetry line of the towing hitch assembly in relation to the first link member and the first grip member, where in the first and second grip members are able to grip around the full body of a towing vehicle in operation at least at two positions, by means of the first and second link member. The advantage of this subject matter is that the second grip member can act in opposite direction to the first grip member thereby creating an improved engagement of the towing vehicle.

A further aspect is described by a towing hitch assembly according to above, wherein the connecting member is connected to the first link member with an vertical axis, such that the first link member can pivot in relation to the connecting member, thus enabling the first grip member to move in and out in direction of a line that extends along and out of the first guide member, preferably a central symmetry line, as the connecting member moves in linear direction along the first guide member. The advantage of this subject matter is that the linear movement of the connecting member act on the first link member with a better possibility to adjust and arrange the movement of the first grip member for best engagement to the towing vehicle, and also in cooperation with the third guide member the engagement can be released at breaking of the towing vehicle.

A further aspect is described by a towing hitch assembly according to the aspect above, wherein the connecting member is connected to the second link member with a vertical axis, such that the second link member can pivot in relation to the connecting member, thus enabling the second grip member to move in and out in direction of a line that extends along and out of the first guide member, preferably a central symmetry line as the connecting member moves in linear direction along the first guide member. The advantage of the subject matter is that the linear movement of the connecting member act on the second link member with a better possibility to adjust and arrange the movement of the second grip member for best engagement to the towing vehicle, and also in cooperation with the third guide member the engagement can be released at breaking of the towing vehicle.

A further aspect is described by a towing hitch assembly according to any of the two previous aspects, wherein the connecting member is attached to the first guide member with a vertical axis, such that the connecting member can pivot in a plane, preferably a horizontal plane, wherein when a towing vehicle moves one of the positions away from line that extends along and out of the first guide member, preferably the central symmetry line, due to direction corrections, the other position is disengaged from the towing vehicle by pivot movements around the respective vertical axis by linkage members acting on and acted by connecting member. The advantage of this aspect is that a cooperation of the two grip members is achieve in that in a turn both grip members can interact in a favourable manner, such that one grip member releases the engagement with the towing vehicle but the other grip member keeps the engagement. Thus a support is provided on one side of the towing vehicle and the other side can move more freely.

A further aspect is described by a towing hitch assembly according to any aspect above, wherein the first and/or second grip member is/are attached to the link member by means of an axis. The advantage of this aspect is that the grip member is attached by means of an axis. This enables that the grip member does not rotate as the link member moves angularly.

A further aspect is described by a towing hitch assembly according to any aspect above, wherein further comprised is a spring device, preferably a gas spring, wherein the spring device is connected to the connecting member and applies a spring force such that the towing hitch assembly can achieve the non-engaging configuration in an automatic manner. The advantage of this aspect is that the spring device makes the towing hitch assembly very easy to use. A safe non-engaging position is achieved as no operator needs to interact.

A further aspect is described by a towing hitch assembly according to any of the aspects above wherein the spring applies a spring force that acts on the connecting member and thereby also act on the first and/or the second grip member by means of the first and/or second link member such that the first and/or the second grip member due to the applied spring force is/are moved in a direction away from a line that extends along and out of the first guide member, preferably a central symmetry line, if no towing vehicle applies a force that equalizes or exceeds the spring force. The effect is that the engagement of the grip member is not upheld if a force acting on the connection member is no longer present.

A further aspect is described by a towing hitch assembly according to any aspect above, wherein the first guide member comprises a first rail device and a slide device connected to the first rail device, preferably the first rail device is parallel with a line that extends along and out of the first guide member, preferably a central symmetry line of the towing hitch assembly, even more preferred the first rail device is positioned along and on the central symmetry line and/or along a line that extends along the first guide member. A rail device provides for a controlled movement of the connecting member, if parallel with the central symmetry line the movement is linear in a particularly favourable direction for a good function of the towing hitch assembly.

A further aspect is described by a towing hitch assembly according to any aspect above, wherein the second guide member is mounted at an angle compared to the first guide member, wherein the second guide member comprises a second rail device and a slide device connected to the second rail device, preferably said angle is less than 90 degrees. The effect of this aspect is that the angled mount of the second guide member gives a good function compared with a solely transversal movement of the first grip member, which would require a much more complex linkage system to operate well

A further aspect is described by a towing hitch assembly according to the previous aspect wherein the third guide member is mounted at an angle compared to the first guide member wherein the third guide member comprises a third rail device and a slide device connected to the third rail device, preferably the third guide member is mounted on opposite side of the first guide member compared with the second guide member, preferably said angle is less than 90 degrees. The angled mount of the third guide member gives a good function compared with a solely transversal movement of the first grip member, which would require a much more complex linkage system to operate well

A further aspect describes a carrier vehicle having all the given advantages above as a towing hitch assembly is attached thereto.

A further aspect is described by a towing system comprising a carrier vehicle according to the aspect above, and a towing vehicle, wherein the carrier vehicle comprises two swivelling wheels, preferably four swivelling wheels, and the carrier vehicle has a limited travel speed of 15 km/h, more preferred 7 km/h, even more preferred 3 km/h, and preferably the carrier vehicle has a maximum total weight of 400 kg, preferably 200 kg, further the towing system is preferably adopted for indoor use only, wherein the towing vehicle has a high point that engages the connecting member of the towing hitch assembly, such that the towing vehicle in full can pass under the towing hitch assembly for engaging the connecting member, preferably the high point is a protrusion, even more preferred the high point is a pin that is retractable. The advantage of a towing system, comprising a towing vehicle and a carrier vehicle, as the system requires the carrier vehicle to have two swivelling wheels and a limited travel speed, is that these features make it possible to provide a carrier vehicle that is very light and easy to conceive and further is very manoeuvrable together with the towing vehicle. Further the towing vehicle is required to have a high point that engages with the connecting member of the towing hitch assembly. This provides for that the towing vehicle can pass under the towing hitch assembly and the carrier vehicle in full, thus allowing the towing vehicle to engage the carrier vehicle in a simple manner that does not require space in front of the carrier vehicle.

### LIST OF DRAWINGS

Figure 1 discloses a prior art towing vehicle from the side.
Figure 2 discloses a prior art towing vehicle from above.
Figure 3 discloses a towing vehicle engaging a carrier vehicle with an attached towing hitch assembly according to the invention, thus creating a system according to the invention as seen from the side.
Figure 4 discloses a towing system according to the invention from above before engagement of the towing vehicle to the towing hitch assembly.
Figure 5 discloses a towing hitch assembly according to the invention from above
Figure 6 discloses a towing hitch assembly according to the invention from below.
Figure 7 discloses a towing vehicle that is about to engage a towing hitch assembly according to the invention.
Figure 8 discloses a towing vehicle that has engaged a towing hitch assembly according to the invention, thereby creating a towing hitch system according to the invention.

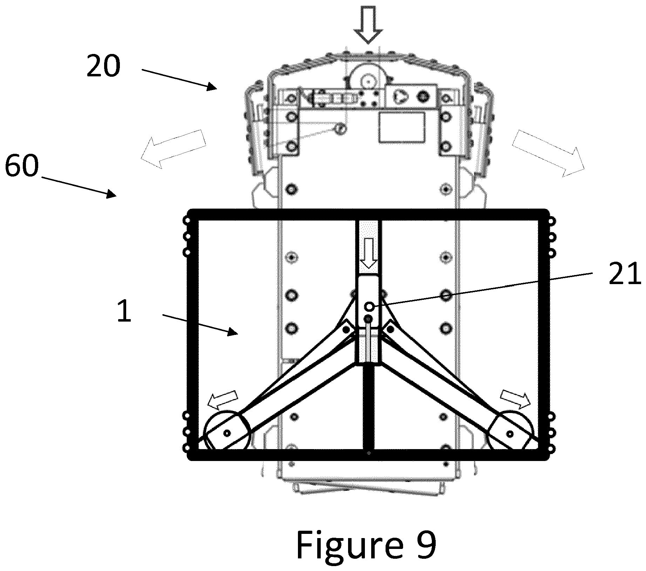

Figure 9 discloses braking of an engaged a towing vehicle and the ensuing partial disengagement of the towing hitch assembly according to the invention.
Figure 10 discloses a direction correction of an engaged towing vehicle to the towing hitch assembly according to the invention.
Figure 11 discloses a direction correction of an engaged towing vehicle to the towing hitch assembly according to the invention.

### DETAILED DESCRIPTION

The general object or idea of the present disclosure is to address at least one or some of the disadvantages with the prior art solutions described above as well as below. The various steps described below in connection with the figures should be primarily understood in a logical sense.

The terminology used herein is for the purpose of describing particular aspects of the disclosure only, and is not intended to limit the disclosure to any particular embodiment. As used herein, the singular forms "a", "an" and "the" are intended to include the plural forms as well, unless the context clearly indicates otherwise.

The present disclosure relates to a towing hitch assembly. The towing hitch assembly comprises a connecting member. This member can for example be a plate having a through hole or a recess. In the through hole or recess a towing vehicle can engage the towing hitch assembly. The connecting member can be slidably arranged in the assembly such that it can alter its position along a provided a guide member. The connecting member is preferred to be connected to the guide member by means of an axis. Preferably this axis is a vertical axis. The towing hitch assembly has at least one grip member attached to the connecting member. The grip member could be directly connected to the connecting member. The grip member is connected to the connecting member via a first link member. The first link member is connected to the connecting member. The first link member can be connected to the connecting member by an axis. The axis is preferred to be a vertical axis. The first link member can be connected to a second guide member. The first link member is preferred to be slidably connected to the second guide member. The second guide member is preferred to be connected at an angle to the first guide member. In a preferred function of the towing hitch assembly, a sliding movement of the connecting member as guided by the first guide member gives rise to a corresponding sliding movement is performed by the first gripping by means of the first link member as guided by the second guide member. This movement is preferred to be along the second guide member and have the direction away and back towards a line drawn from the centre and along the first guide member. The grip member can be a round object. The grip member can be made from rubber, resin or other resilient friction giving material. The grip member is preferred to be construed as a member that can be pressed against a surface and by friction to this surface can engage with the surface. The towing hitch assembly has a second grip member and a second link member, that have the same features and properties as the first grip member and the first link member. There is also provided a third guide member connected to the first guide member. The third guide member is preferably attached to the second link member, such that the second link member can slide on the third guide member. Preferably the third guide member is attached at an angle to the first guide member. Preferably the third guide member is provided opposite a line of the towing hitch assembly that is drawn as a longitudinal line along the centre of the first guide member, when related to the second guide member. Preferably the angle between the second guide member and the first guide member is the same as the angle between the third guide member and the first guide member, but the angle between the second guide member and the first guide member protrudes clockwise from a longitudinal line extending along the centre of the first guide member and the angle of the third guide member and the first guide member starts at the said line and protrudes anti clockwise. The longitudinal line along extending along and the first guide member and beyond can preferably be a central symmetry line of the towing hitch assembly. As discussed a line along first guide member and out of it or if a central symmetry line, should be understood as a vertical plane when the towing hitch assembly is in normal operation.

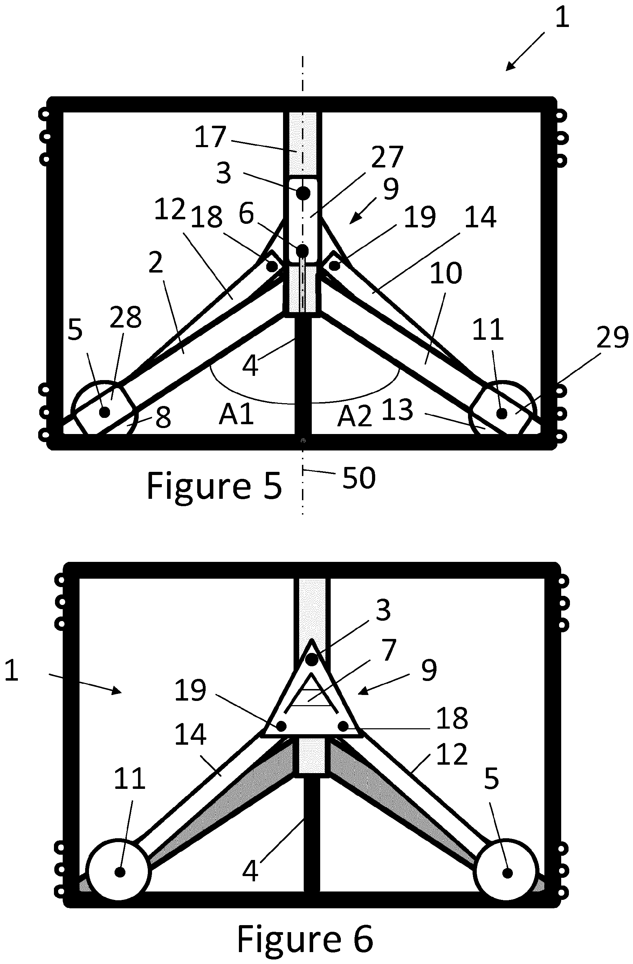

Figure 5 and Figure 6 discloses a towing hitch assembly 1 according to one aspect of the disclosure. The towing hitch assembly 1 comprises a connecting member 9, a first grip member 8, and a second grip member 13. Further comprised are three guide devices 17, 2, 10. The connecting member 9 has a recess 7, the recess 7 can also be a hole. The recess or hole 7 need not be round, they can have any suitable shape. The guide members 17, 2, 10 are preferably provided as rails on which a respective slide device 27, 28, 29 is slidably attached. Further the connecting member is attached to the slide device through a pivot axis 3. This axis 3 allows for the connecting member 9 to rotate in a plane. The plane is preferably a horizontal plane in normal operation that is the axis 3 is a vertical axis when the towing hitch assembly is in operation. Further two link members 12 and 14 are attached to the connecting member 9. The attachment of the link members 12, 14 is preferred to be by a respective vertical axis 18 and 19. The other end of the link devices attached to the grip members 8, 13. A central line extending from the first guide member 17 and if assembly is symmetrical it can be a symmetry line 50 as is disclosed in figure 5. However it should be understood that the line extending from the first guide member 17 or as called a symmetry line 50, is more precisely to be understood as a vertical plane when the towing hitch assembly 1 is in operation. If the towing hitch assembly is not symmetric the position of the line of the first guide member 17 or as called central symmetry line 50 or plane, should be the same, i.e. a long a central middle in longitudinal direction of the towing hitch assembly 1, coinciding with the central line of the first guide member 17. The grip member 8, 13 has an optional central axis 5 and 11. If this axis 5, 11 is present the grip member can rotate. The second and the third guide members 2, 10 are preferably mounted at an angle A1 and A2 to the first guide member 17. These angles are preferred to be comprised in the range less than 90 degrees, e.g. 5 degrees to 85 degrees.

All things the same except the towing hitch assembly is not symmetrical, in this aspect there is only one grip member 8 that is movable by means of link member 12 and guide member 2. Still a connecting member 9 with corresponding guide member etc. is provided. However the second grip member is a fixed grip member which can cooperate with the first grip member 8, when the first grip member 8 moves in order to engage and disengage a towing vehicle. This is not a preferred solution but still possible. This solution must be carefully tuned so that oscillations will not be occurring due to fixed grip member on one side and not the other side, of the towing grip assembly.

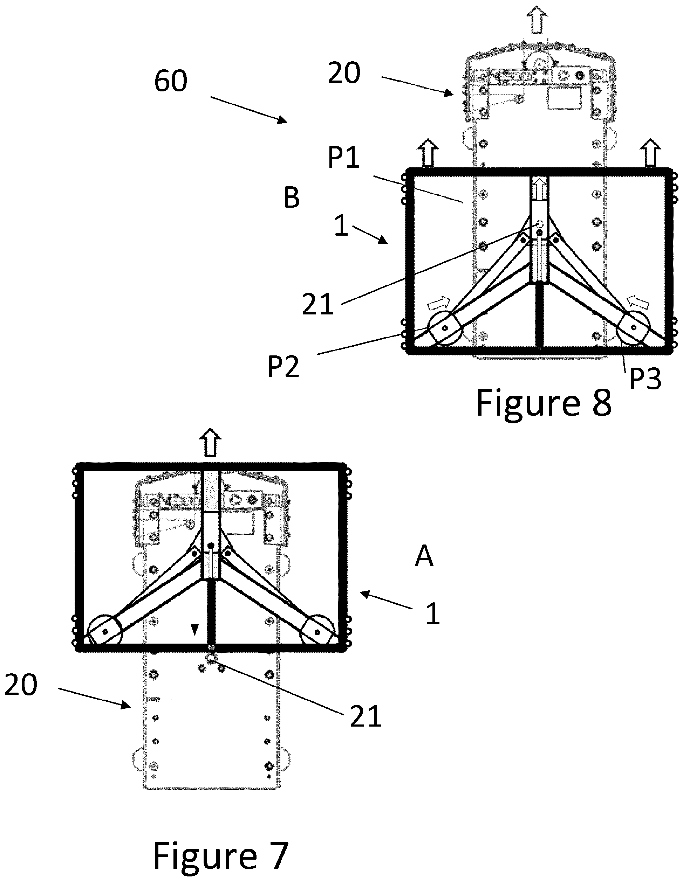

Preferably the towing hitch assembly 1 comprises a spring 4. The spring 4 is preferably a gas spring, but can also be a helical spring or any other suitable spring. The spring is connected to the connecting member 9, preferably through the slide device 27. The spring pulls the connecting member 9 and consequently the towing hitch assembly 1 to its non-engaging configuration A as seen in figure 7. This pull is made by the spring force. At this operation the link members 12 and 14 pushes the grip devices 8, 13 on the second and third guide devices 2 and 10 to the non-engaging configuration A, figure 7.

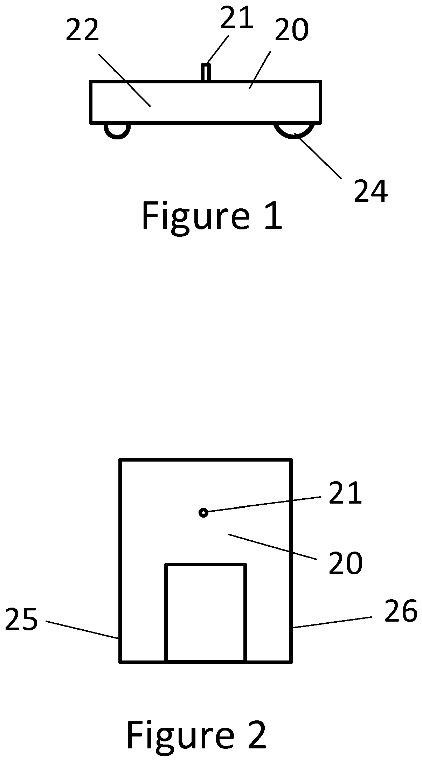

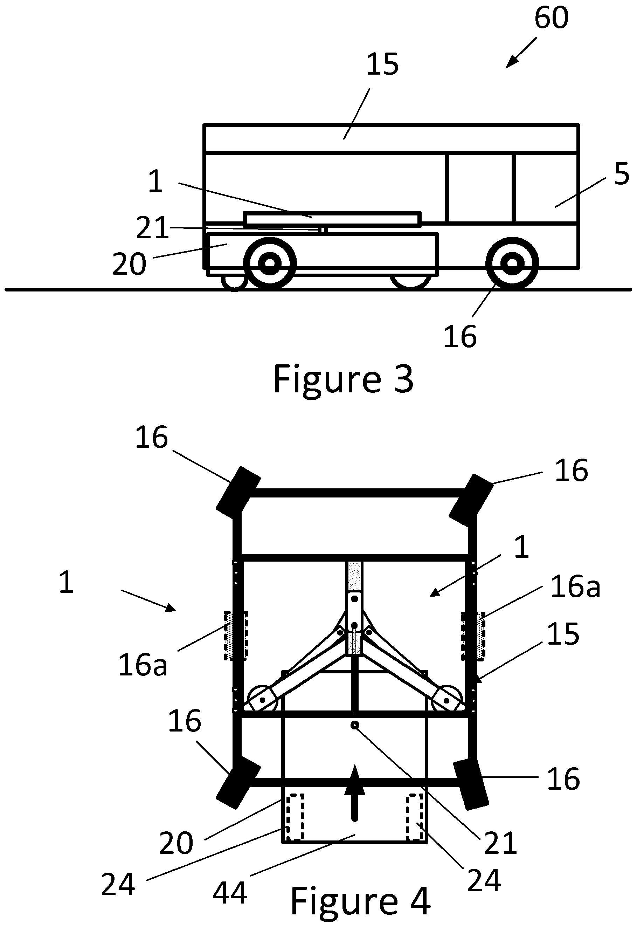

Figure 1 and 2, discloses a towing vehicle 20. The towing vehicle 20 is preferably an electrical vehicle. The power to the towing vehicle 20 is preferably provided from an internal battery that is rechargeable. The important design of the towing vehicle is that it is lower than the height over the surface where the towing hitch assembly 1 is attached to a carrier vehicle 15, see figure 3. A major aspect of the present disclosure is that at operation, the towing vehicle 20 passes in full under the carrier vehicle 15 and engages the connecting member 9 of the towing hitch assembly 1. And the towing vehicle 20 then continues its movement in the direction of the towing hitch assembly 1 and alters the configuration of a towing hitch assembly 1, see figure 5 and 6, from the first configuration A, figure 7 to a second configuration B, figure 8. The engagement of the towing vehicle 20 is preferably made by the high point 21 of the towing vehicle 20. The high point is preferably a pin 21. The pin 21 can have a spring resilient function such that when it is pressed down from above it moves resiliently downwards. This provides for an easy engagement of a connecting member 9 as the pin can be partly pressed down beginning of the connecting member 9 and then be more pressed down by the further in on the connecting member 9, as the towing vehicle 20 moves under the towing hitch assembly 1. When the pin 21 reaches the connecting member 9 it can resiliently extend upwards and thereby engage a recess 7. And thereafter perform the operation of altering the towing hitch assembly 1 from its first configuration A, to its second configuration B. The towing vehicle 20 is preferably an AGV or an auto guided vehicle, this means that it can operate on its own without direct human control. This means that the towing vehicle can be programmed to perform tasks and then perform them without any human intervention. The towing vehicle 20 is preferably controlled by providing two essentially parallel wheels that can be operated in different directions or alternatively one of the wheels 24, figures 2, 4, can brake as the other wheel is driven, or one wheel 24 is driven and the other 24 is free wheeled.

To perform a releasing operation the towing vehicle preferably lowers the high point 21. This is performed by a non-disclosed mechanism within the towing vehicle 20. After this is performed the towing vehicle 20 can move freely and the spring device 8, 13, 52 retracts the towing hitch assembly to its non-engaging configuration A.

The carrier vehicle 15 is preferably built from a structure of tubes. The carrier vehicle 15 is preferably adapted for indoor use. Thus it can be made in a very simple manner. The speed limit for the carrier vehicle 15 is preferably 15 km/h more preferably 10 km/h or more preferable 7 km/h, in general 3 km/h is often used. The low speed limit provides for that the carrier vehicle can have a very simple configuration. The carrier vehicle 15 preferably comprises at least two swivelling wheels 16, see figure 2, and 3. There can be more swivelling wheels 16 if desired. And of course there can be more than four wheels. For example there can be a configuration with two swivelling wheels at the front and back of the carrier vehicle and two wheels 16a around the middle in longitudinal direction, see option in figure 2. Preferably, in this configuration, the middle wheels 16a are linear wheels with no swivelling function. And further if middle wheels 16a are applied they should bear most of the weight of the load carrier vehicle. This is preferably achieved by providing that the middle wheels 16a protrude 5 mm longer down compared to the swivelling wheels 16. This in turn means that the swivelling wheels 16 have the main function to be support wheels not to be weight carrier wheels. The carrier vehicle 15 has a maximal total weight of 400 kg, preferably 200 kg.

The towing vehicle 20 and the carrier vehicle 15 is disclosed as a towing system 60, when the carrier vehicle 15 has a towing hitch assembly 1 as described above is attached to it, figure 3 8, 9, 10 and 11.

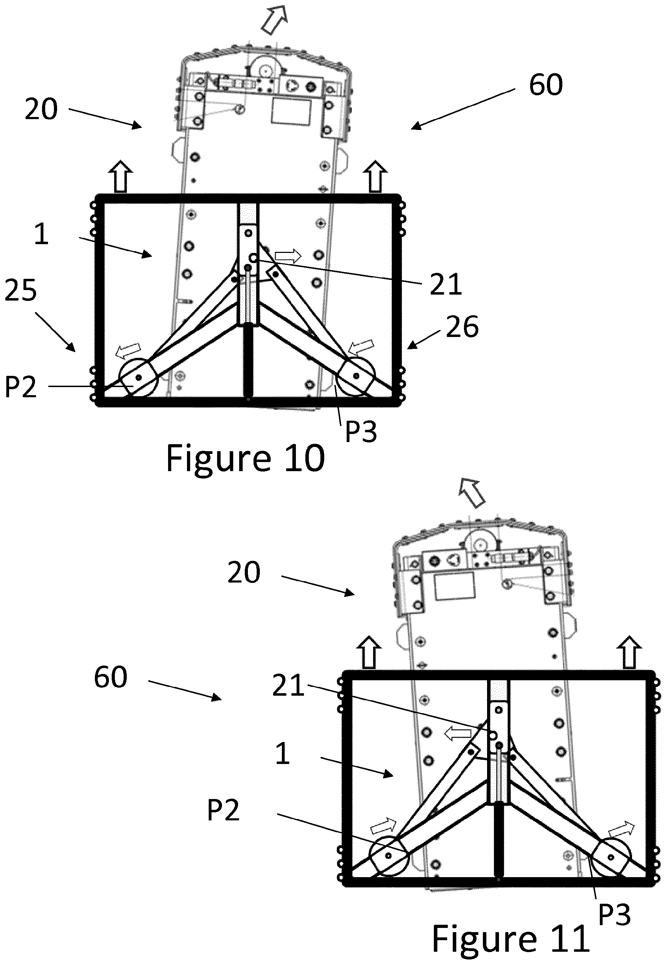

The function of the above towing hitch assembly 1 can be described as follows. The towing vehicle 20 enters a carrier vehicle 15 from behind as seen for example in figure 4 or 7. When the pin 21 of the towing vehicle 20 engages the connecting member 9 at position P1 in a recess or hole 7, it pulls the connecting member 9 along the first guide member 17. The linkage members 12 and 14 as connected to the connecting member 9 are also pulled and thereby moves the gripping member 8 and 13 in direction of the central symmetry line 50 such that the towing vehicle 20 is engaged at position P2 and P3. Thus the full body of the towing vehicle 20 is engaged. Thus the if the towing vehicle brakes, the spring 4 pulls the connecting member in and thereby the linkage members 12, 14 pushes the grip member away from the position P2 and P3 of the towing vehicle. This allows for the towing vehicle 20 to make a sharper turn as both positions P2 and P3 are disengaged and the mass of the carrier vehicle 15 need not affect the correction of direction of the towing vehicle 20. When the towing vehicle 20 then continues in new direction the positions P2 and P3 are again engaged by gripping devices 8 and 13. In a lighter turn the vertical axis 3 allows the connecting member 9 to pivot, for example in a right turn as in figure 10. In this light turn the connecting member 9 rotates counter clockwise and thereby pulling link member 14 and moving grip member 13 towards the towing vehicle 20 at position P3, and at the same time pushing link member 12 and thereby moving the grip member 8 away from/with the tow vehicle 20 at position P2. It is thus possible that the grip members 8, 13 are moved together with the towing vehicle 20 thus not fully disengaging the vehicle at positions P2 and/or P3, but allowing for a movement of the towing vehicle 20 without moving the carrier vehicle 15. By doing this an oscillation movement of the towing vehicle 20 and the carrier vehicle 15 is avoided compared with a fixed installation of grip devices at the sides of the towing vehicle 20, with the moving towing system 60. One reason for the avoidance of an oscillation is that the carrier vehicle 15 need not make all the heading corrections as the towing vehicle 20 is performing, in particular not at the same time as the carrier vehicle 20. A corresponding but reversed operation can be observed in a left turn as disclosed by figure 11.

The recess or hole 7 can preferably be designed as an elongated parallelogram, figure 6. By having this design a protruding pin 21 from the towing vehicle 20 can move at least in transversal direction when engaged with the hole or recess 7, Figure 10 and 11. This improves the function of the towing hitch assembly 1 in a turn, as the protruding pin 21 can alter position and thus improve the liberty of the towing vehicle 20 to move without affecting a carrier vehicle 15, as it gives more transversal freedom of movement.

As an option the second and third guide members 12 and 14 is dispensed with and the axis 18 and 19 are fixed. In this configuration engagement by the grip member is provided by resilience in the link members 12, 14 and/or the grip member 8, 13. The assembly would then be more easily produced and disclose a V with a fixed angle between the fixed link members. A new configuration for springs would be desired in order to keep this towing hitch assembly in a non-engaging configuration where the link members and grip member are positioned at an essentially equal distance to the central symmetry line 50, but on opposing sides of it. However this design requires so much resilience in the towing hitch assembly 1 such that oscillations will not occur.

In a further development only one side of the towing hitch assembly has a movable grip member. The prevention of the oscillations is preferably made best on this side. The opposing side is left open or has a fixed grip member for cooperation with the movable grip member.

## Claims

1. A towing hitch assembly (1) comprising, a connecting member (9), a first link member (12) connected to the connecting member (9), a first grip member(8) connected to the first link member (12), a first guide member (17) that allows for the connecting member (9) to be movable a linear direction, preferably along a line that extends along and out of the first guide member (17), preferably being a central symmetry line (50) of the towing hitch assembly (1), a second guide member (2) that is connected to the grip member (8), wherein the towing hitch assembly (1) can alter position between a first non-engaging configuration (A) in which a towing vehicle (20) is not engaged by the towing hitch assembly (1) and an engaging configuration (B) where the towing hitch assembly (1) is engaging the towing vehicle (20) at least at two separate positions (P1, P2) of the towing vehicle (20), wherein one of the positions (P2) where the towing vehicle (20) is engaged by the grip member (8) can be released from engagement, or move as engaged together with towing vehicle (20), by a movement of the connecting member (9) and thereby altering position of the grip member (8) as guided by the second guide member (2), wherein thereby oscillation in operation can be prevented between the towing vehicle (20) and a carrier vehicle (15) to which the towing hitch assembly (1) is intended to be attached, wherein further comprised is a second link member (14) connected to the connecting member (9) and a second grip member (13) connected to the second link member (14) and further a third guide member (10) connected to the second grip member (13), wherein the second grip member can engage the towing vehicle (20) at a third position (P3), wherein the second link member (14) and second grip member (13) are positioned on the opposite side of a line that extends along and out of the first guide member (17), preferably a central symmetry line (50) of the towing hitch assembly (1), in relation to the first link member (12) and the first grip member (8), where in the first and second grip members (8, 13) are able to grip around the full body of a towing vehicle (20) in operation at least at two positions (P2, P3), by means of the first and second link member (12, 14).

2. A towing hitch assembly (1) according to claim 1, wherein the connecting member (9) is connected to the first link member (12) by means of a vertical axis (18), such that the first link member (12) can pivot in relation to the connecting member (9) and thereby move the grip member (8) with guiding from the second guide member (2).

3. A towing hitch assembly according to claim 1 or 2, wherein the connecting member (9) is connected to the first link member (12) with an vertical axis (18), such that the first link member (18) can pivot in relation to the connecting member (9), thus enabling the first grip member to move in and out in direction of a line that extends along and out of the first guide member (17), preferably a central symmetry line (50), as the connecting member (9) moves in linear direction along the first guide member (17).

4. A towing hitch assembly (1) according to claim 3, wherein the connecting member (9) is connected to the second link member (14) with a vertical axis (19), such that the second link member (19) can pivot in relation to the connecting member (9), thus enabling the second grip member (13) to move in and out in direction of a line that extends along and out of the first guide member (17), preferably a central symmetry line (50), as the connecting member (9) moves in linear direction along the first guide member (17).

5. A towing hitch assembly (1) according to claim 3 or 4, wherein the connecting member (9) is attached to the first guide member (17) with a vertical axis (3), such that the connecting member (9) can pivot in a plane, preferably a horizontal plane, wherein when a towing vehicle (20) moves one of the positions (P2; P3) away from the line that extends along and out of the first guide member (17), preferably a the central symmetry line (50), due to direction corrections, the other position (P2; P3) is disengaged from the towing vehicle (20), or moves with the towing vehicle (20) as engaged, by pivot movements around the respective vertical axis (3, 18, 19) by linkage members (12;14) acting on and acted by connecting member (9).

6. A towing hitch assembly according to any of the claims above, wherein the first and/or second grip member (8, 13) is/are attached to the link member (12, 14) by means of an axis (5, 11).

7. A towing hitch assembly (1) according to any of the claims above, wherein further comprised is a spring device (4), preferably a gas spring, wherein the spring device (4) is connected to the connecting member (9) and applies a spring force such that the towing hitch assembly (1) can achieve the non-engaging configuration (A) in an automatic manner.

8. A towing hitch assembly (1) according to claim 7, wherein the spring (4) applies a spring force that acts on the connecting member (9) and thereby also act on the first and/or the second grip member (8, 13) by means of the first and/or second link member (12, 14) such that the first and/or the second grip member (8, 13) due to the applied spring force is/are moved in a direction away from a line that extends along and out of the first guide member (17), preferably a central symmetry line (50), if no towing vehicle applies a force that equalizes or exceeds the spring force.

9. A towing hitch assembly (1) according to any of the claims above, wherein the first guide member (17) comprises a first rail device and a slide device (27) connected to the first rail device, preferably the first rail device is parallel with a line that extends along and out of the first guide member (17), preferably a central symmetry line (50) of the towing hitch assembly (1), even more preferred the first rail device is positioned along and on the central symmetry line (50) and/or along a line that extends along the first guide member (17).

10. A towing hitch assembly (1) according to any of the claims above, wherein the second guide member (2) is mounted at an angle (A1) compared to the first guide member (17), wherein the second guide member (2) comprises a second rail device and a slide device (28) connected to the second rail device, preferably said angle (A1) is less than 90 degrees.

11. A towing hitch assembly (1) according to claim 10, wherein the third guide member (10) is mounted at an angle (A2) compared to the first guide member (17), wherein the third guide member (10) comprises a third rail device and a slide device (29) connected to the third rail device, preferably the third guide member (10) is mounted on opposite side of the first guide member (17) compared with the second guide member (2), preferably said angle (A2) is less than 90 degrees.

12. A carrier vehicle (15) as modified by attachment of a towing hitch assembly (1) according to any of the claims above.

13. A towing system (60) comprising a carrier vehicle (15) according to claim 12, and a towing vehicle (20), wherein the carrier vehicle (15) comprises two swivelling wheels (16), preferably four swivelling wheels, and the carrier vehicle (15) has a limited travel speed of 15 km/h, more preferred 7 km/h, even more preferred 3 km/h, and preferably the carrier vehicle (15) has a maximum total weight of 400 kg, preferably 200 kg, further the towing system (60) is preferably adopted for indoor use only, wherein the towing vehicle (20) has a high point (21) that engages the connecting member (9) of the towing hitch assembly (1), such that the towing vehicle (20) in full can pass under the towing hitch assembly (1) for engaging the connecting member (9), preferably the high point is a protrusion (21), even more preferred the high point is a pin (21) that is retractable.

## Patentansprüche

1. Anhängekupplungsanordnung (1) umfassend ein Verbindungselement (9), ein erstes Gelenkelement (12), das mit dem Verbindungselement (9) verbunden ist, ein erstes Griffelement (8), das mit dem ersten Gelenkelement (12) verbunden ist, ein erstes Führungselement (17), das es ermöglicht, dass das Verbindungselement (9) in einer linearen Richtung, vorzugsweise entlang einer Linie, die sich entlang und aus dem ersten Führungselement (17) erstreckt, bewegbar ist, vorzugsweise eine zentrale Symmetrielinie (50) der Anhängekupplungsanordnung (1) ist, ein zweites Führungselement (2), das mit dem Griffelement (8) verbunden ist, wobei die Anhängekupplungsanordnung (1) die Position zwischen einer ersten Nichteingriffskonfiguration (A), in der ein Zugfahrzeug (20) nicht mit der Anhängekupplungsanordnung (1) in Eingriff steht, und einer Eingriffskonfiguration (B), in der die Anhängekupplungsanordnung (1) mit dem Zugfahrzeug (20) zumindest an zwei separaten Positionen (P1, P2) des Zugfahrzeugs (20) in Eingriff ist, verändern kann, wobei eine der Positionen (P2), wo das Zugfahrzeug (20) mit dem Griffelement (8) in Eingriff steht, aus dem Eingriff gelöst oder in Eingriff zusammen mit dem Zugfahrzeug (20) bewegt werden kann, durch eine Bewegung des Verbindungselements (9), und dadurch Verändern der Position des Griffelements (8), das durch das zweite Führungselement (2) geführt ist, wobei dadurch eine Schwingung im Betrieb zwischen dem Zugfahrzeug (20) und einem Trägerfahrzeug (15), an dem die Anhängekupplungsanordnung (1) zu befestigen ist, verhindert werden kann, wobei ferner ein zweites Gelenkelement (14), das mit dem Verbindungselement (9) verbunden ist, und ein zweites Griffelement (13), das mit dem zweiten Gelenkelement (14) verbunden ist, und ferner ein drittes Führungselement (10), das mit dem zweiten Griffelement (13) verbunden ist, vorgesehen sind, wobei das zweite Griffelement mit dem Zugfahrzeug (20) an einer dritten Position (P3) in Eingriff gehen kann, wobei das zweite Gelenkelement (14) und das zweite Griffelement (13) auf der gegenüberliegenden Seite einer Linie positioniert sind, die sich entlang und aus dem ersten Führungselement (17), vorzugsweise einer zentralen Symmetrielinie (50) der Anhängekupplungsanordnung (1), in Bezug auf das erste Gelenkelement (12) und das erste Griffelement (8) erstreckt, wobei das erste und zweite Griffelement (8, 13) mittels des ersten und zweiten Gelenkelements (12, 14) im Betrieb zumindest an zwei Positionen (P2, P3) um den vollen Körper eines Zugfahrzeugs (20) herum greifen können.

2. Anhängekupplungsanordnung (1) nach Anspruch 1, wobei das Verbindungselement (9) mit dem ersten Gelenkelement (12) mittels einer vertikalen Achse (18) derart verbunden ist, dass das erste Gelenkelement (12) in Bezug auf das Verbindungselement (9) schwenken kann und dadurch das Griffelement (8) mit einer Führung von dem zweiten Führungselement (2) bewegen kann.

3. Anhängekupplungsanordnung nach Anspruch 1 oder 2, wobei das Verbindungselement (9) mit dem ersten Gelenkelement (12) mit einer vertikalen Achse (18) derart verbunden ist, dass das erste Gelenkelement (18) in Bezug auf das Verbindungselement (9) schwenken kann, wodurch es dem ersten Griffelement ermöglicht wird, sich in und aus in Richtung einer Linie, die sich entlang und aus dem ersten Führungselement (17), vorzugsweise einer zentralen Symmetrielinie (50), erstreckt, zu bewegen, wenn sich das Verbindungselement (9) in linearer Richtung entlang des ersten Führungselements (17) bewegt.

4. Anhängekupplungsanordnung (1) nach Anspruch 3, wobei das Verbindungselement (9) mit dem zweiten Gelenkelement (14) mit einer vertikalen Achse (19) derart verbunden ist, dass das zweite Gelenkelement (19) in Bezug auf das Verbindungselement (9) schwenken kann, wodurch es dem zweiten Griffelement (13) ermöglicht wird, sich in und aus in Richtung einer Linie, die sich entlang und aus dem ersten Führungselement (17) erstreckt, vorzugsweise einer zentralen Symmetrielinie (50), zu bewegen, wenn sich das Verbindungselement (9) in linearer Richtung entlang des ersten Führungselements (17) bewegt.

5. Anhängekupplungsanordnung (1) nach Anspruch 3 oder 4, wobei das Verbindungselement (9) an dem ersten Führungselement (17) mit einer vertikalen Achse (3) derart befestigt ist, dass das Verbindungselement (9) in einer Ebene, vorzugsweise einer horizontalen Ebene, schwenken kann, wobei dann, wenn ein Zugfahrzeug (20) eine der Positionen (P2; P3) weg von der Linie, die sich entlang und aus dem ersten Führungselement (17) erstreckt, vorzugsweise einer zentralen Symmetrielinie (50), aufgrund von Richtungskorrekturen bewegt, die andere Position (P2; P3) von dem Zugfahrzeug (20) gelöst wird oder sich mit dem Zugfahrzeug (20) als im Eingriff stehend durch Schwenkbewegungen um die jeweilige vertikale Achse (3, 18, 19) herum durch Gelenkelemente (12;14) bewegt, die auf das Verbindungselement (9) wirken und von diesem eingewirkt werden.

6. Anhängekupplungsanordnung nach einem der vorhergehenden Ansprüche, wobei das erste und/oder zweite Griffelement (8, 13) mittels einer Achse (5, 11) an dem Gelenkelement (12, 14) befestigt ist bzw. sind.

7. Anhängekupplungsanordnung (1) nach einem der vorhergehenden Ansprüche, wobei ferner eine Federvorrichtung (4), vorzugsweise eine Gasfeder, vorgesehen ist, wobei die Federvorrichtung (4) mit dem Verbindungselement (9) verbunden ist und eine Federkraft derart aufbringt, dass die Anhängekupplungsanordnung (1) die Nichteingriffskonfiguration (A) automatisch erreichen kann.

8. Anhängekupplungsanordnung (1) nach Anspruch 7, wobei die Feder (4) eine auf das Verbindungselement (9) wirkende Federkraft aufbringt und dadurch auch mittels des ersten und/oder zweiten Gelenkelements (12, 14) auf das erste und/oder das zweite Griffelement (8, 13) derart einwirkt, dass das erste und/oder das zweite Griffelement (8, 13) wegen der aufgebrachten Federkraft in einer Richtung weg von einer Linie bewegt wird, die sich entlang und aus dem ersten Führungselement (17), vorzugsweise einer zentralen Symmetrielinie (50), erstreckt, wenn kein Zugfahrzeug eine die Federkraft ausgleichende oder übersteigende Kraft aufbringt.

9. Anhängekupplungsanordnung (1) nach einem der vorhergehenden Ansprüche, wobei das erste Führungselement (17) eine erste Schienenvorrichtung und eine mit der ersten Schienenvorrichtung verbundene Gleitvorrichtung (27) umfasst, vorzugsweise die erste Schienenvorrichtung parallel zu einer Linie ist, die sich entlang und aus dem ersten Führungselement (17), vorzugsweise einer zentralen Symmetrielinie (50) der Anhängekupplungsanordnung (1), erstreckt, noch bevorzugter die erste Schienenvorrichtung entlang und auf der zentralen Symmetrielinie (50) und/oder entlang einer Linie angeordnet ist, die sich entlang des ersten Führungselements (17) erstreckt.

10. Anhängekupplungsanordnung (1) nach einem der vorhergehenden Ansprüche, wobei das zweite Führungselement (2) in einem Winkel (A1) im Vergleich zu dem ersten Führungselement (17) montiert ist, wobei das zweite Führungselement (2) eine zweite Schienenvorrichtung und eine mit der zweiten Schienenvorrichtung verbundene Gleitvorrichtung (28) umfasst, wobei vorzugsweise der Winkel (A1) kleiner als 90 Grad ist.

11. Anhängekupplungsanordnung (1) nach Anspruch 10, wobei das dritte Führungselement (10) in einem Winkel (A2) im Vergleich zu dem ersten Führungselement (17) montiert ist, wobei das dritte Führungselement (10) eine dritte Schienenvorrichtung und eine mit der dritten Schienenvorrichtung verbundene Gleitvorrichtung (29) umfasst, wobei vorzugsweise das dritte Führungselement (10) auf der gegenüberliegenden Seite des ersten Führungselements (17) im Vergleich zu dem zweiten Führungselement (2) montiert ist, wobei vorzugsweise der Winkel (A2) kleiner als 90 Grad ist.

12. Trägerfahrzeug (15), welches durch das Befestigen einer Anhängekupplungsanordnung (1) nach einem der vorhergehenden Ansprüche modifiziert ist.

13. Anhängesystem (60) umfassend ein Trägerfahrzeug (15) nach Anspruch 12 und ein Zugfahrzeug (20), wobei das Trägerfahrzeug (15) zwei Schwenkräder (16), vorzugsweise vier Schwenkräder, umfasst, und das Trägerfahrzeug (15) eine begrenzte Fahrgeschwindigkeit von 15 km/h, bevorzugter 7 km/h, noch bevorzugter 3 km/h, aufweist, und vorzugsweise das Trägerfahrzeug (15) ein maximales Gesamtgewicht von 400 kg, vorzugsweise 200 kg, aufweist, wobei ferner das Anhängesystem (60) vorzugsweise nur für den Inneneinsatz eingerichtet ist, wobei das Zugfahrzeug (20) einen mit dem Verbindungselement (9) der Anhängekupplungsanordnung (1) in Eingriff stehenden Hochpunkt (21) aufweist, so dass das Zugfahrzeug (20) vollständig unter die Anhängekupplungsanordnung (1) zum Eingriff mit dem Verbindungselement (9) treten kann, wobei vorzugsweise der Hochpunkt ein Vorsprung (21) ist, noch bevorzugter der Hochpunkt ein zurückziehbarer Stift (21) ist.

## Revendications

1. Ensemble attelage de remorquage (1) comprenant un élément de connexion (9), un premier élément de liaison (12) relié à l'élément de connexion (9), un premier élément de préhension (8) relié au premier élément de liaison (12), un premier élément de guidage (17) permettant à l'élément de connexion (9) de se déplacer dans une direction linéaire, de préférence le long d'une ligne qui s'étend le long du premier élément de guidage (17) et sort de celui-ci, de préférence d'une ligne de symétrie centrale (50) de l'ensemble d'attelage de remorquage (1), un deuxième élément de guidage (2) relié à l'élément de préhension (8), l'ensemble d'attelage de remorquage (1) pouvant changer de position entre une première configuration de non-engagement (A) dans laquelle un véhicule tracteur (20) n'est pas engagé par l'ensemble d'attelage de remorquage (1) et une configuration d'embrayage (B) dans laquelle l'ensemble d'attelage de remorquage (1) est en prise avec le véhicule tracteur (20) au moins à deux positions distinctes (P1, P2) du véhicule tracteur (20), l'une des positions (P2) où le véhicule tracteur (20) est engagé par l'élément de préhension (8) peut être libérée de l'engagement, ou se déplacer comme engagée avec le véhicule tracteur (20), par un mouvement de l'élément de connexion (9), modifiant ainsi la position de l'élément de préhension (8) comme guidé par le deuxième élément de guidage (2), une oscillation en fonctionnement pouvant ainsi être empêchée entre le véhicule tracteur (20) et un véhicule porteur (15) auquel l'ensemble de l'attelage de remorquage (1) est destiné à être attaché,
dans lequel est en outre constitué un deuxième élément de liaison (14) relié à l'élément de connexion (9) et un deuxième élément de préhension (13) relié au deuxième élément de liaison (14) et en outre un troisième élément de guidage (10) relié au deuxième élément de préhension (13), le deuxième élément de préhension pouvant venir en prise avec le véhicule tracteur (20) à une troisième position (P3), dans lequel le deuxième élément de liaison (14) et un deuxième élément de préhension (13) sont positionnés du côté opposé d'une ligne qui s'étend le long du premier élément de guidage (17) et sort de celui-ci, de préférence une ligne de symétrie centrale (50) de l'ensemble d'attelage de remorquage (1), par rapport au premier élément de liaison (12) et au premier élément de préhension (8), les premier et deuxième éléments de préhension (8, 13) étant capables de saisir autour de tout le corps d'un véhicule tracteur (20) en fonctionnement en au moins deux positions (P2, P3), au moyen des premier et deuxième éléments de liaison (12, 14).

2. Ensemble d'attelage de remorquage (1) selon la revendication 1, dans lequel l'élément de connexion (9) est relié au premier élément de liaison (12) au moyen d'un axe vertical (18), de sorte que le premier élément de liaison (12) puisse pivoter par rapport à l'élément de connexion (9) et ainsi déplacer l'élément de préhension (8) avec guidage depuis le deuxième élément de guidage (2).

3. Ensemble d'attelage de remorquage selon la revendication 1 ou 2, dans lequel l'élément de connexion (9) est relié au premier élément de liaison (12) au moyen d'un axe vertical (18), de sorte que le premier élément de liaison (18) puisse pivoter par rapport à l'élément de connexion (9), ainsi permettant au premier élément de préhension d'entrer et de sortir en direction d'une ligne qui s'étend le long du premier élément de guidage (17) et sort de celui-ci, de préférence d'une ligne de symétrie centrale (50) lorsque l'élément de connexion (9) se déplace en direction linéaire le long du premier élément de guidage (17).

4. Ensemble d'attelage de remorquage (1) selon la revendication 3, dans lequel l'élément de connexion (9) est relié au deuxième élément de liaison (14) au moyen d'un axe vertical (19), de sorte que le deuxième élément de liaison (19) puisse pivoter par rapport à l'élément de connexion (9), ainsi permettant au deuxième élément de préhension (13) d'entrer et de sortir en direction d'une ligne qui s'étend le long du premier élément de guidage (17) et sort de celui-ci, de préférence d'une ligne de symétrie centrale (50) lorsque l'élément de connexion (9) se déplace en direction linéaire le long du premier élément de guidage (17).

5. Ensemble d'attelage de remorquage (1) selon la revendication 3 ou 4, dans lequel l'élément de connexion (9) est relié au premier élément de liaison (17) au moyen d'un axe vertical (3), si bien que l'élément de connexion (9) peut pivoter dans un plan, préférablement un plan horizontal,
dans lequel lorsqu'un véhicule tracteur (20) déplace l'une des positions (P2; P3) à l'écart de la ligne qui s'étend le long du premier élément de guidage (17) et sort de celui-ci, de préférence d'une ligne de symétrie centrale (50), à cause de corrections de direction, l'autre position (P2; P3) est désengagé du véhicule tracteur (20), ou se déplace avec le véhicule tracteur (20) tel qu'engagé, à pivotement autour de l'axe vertical respectif (3, 18, 19) par des éléments de liaison (12;14) agissant sur et étant actionnées par l'élément de connexion (9).

6. Ensemble d'attelage de remorquage selon l'une quelconque des revendications précédentes, dans lequel le premier et / ou le deuxième élément de préhension (8, 13) est / sont attaché(s) à l'élément de liaison (12, 14) au moyen d'un axe (5, 11).

7. Ensemble d'attelage de remorquage (1) selon l'une quelconque des revendications précédentes, dans lequel est en outre constitué un dispositif à ressort (4), de préférence un ressort à gaz, dans lequel le dispositif à ressort (4) est relié à l'élément de connexion (9) et applique une force de ressort telle que l'ensemble d'attelage de remorquage (1) puisse réaliser la configuration de non engagement (A) de manière automatique.

8. Ensemble d'attelage de remorquage (1) selon la revendication 7, dans lequel le ressort (4) applique une force de ressort qui agit sur l'élément de connexion (9) et agit ainsi également sur le premier et / ou le deuxième élément de préhension (8, 13) au moyen du premier et / ou du deuxième élément de liaison (12, 14), de telle sorte que le premier et / ou le deuxième élément de préhension (8, 13), du fait de la force du ressort appliquée, soient déplacés dans une direction à l'écart d'une ligne qui s'étend le long du premier élément de guidage (17) et sort de celui-ci, de préférence d'une ligne de symétrie centrale (50), si aucun véhicule tracteur n'exerce une force qui égalise ou dépasse la force du ressort.

9. Ensemble d'attelage de remorquage (1) selon l'une quelconque des revendications précédentes, dans lequel le premier élément de guidage (17) comprend un premier dispositif de rail et un dispositif de glissière (27) relié au premier dispositif de rail, de préférence le premier dispositif de rail est parallèle à une ligne qui s'étend le long du premier élément de guidage (17) et sort de celui-ci, de préférence une ligne de symétrie centrale (50) de l'ensemble de l'attelage de remorquage (1), encore plus préféré le premier dispositif de rail est positionné le long de la ligne de symétrie centrale et sur celle-ci (50) et / ou le long d'une ligne qui s'étend le long du premier élément de guidage (17).

10. Ensemble d'attelage de remorquage (1) selon l'une quelconque des revendications précédentes, dans lequel le deuxième élément de guidage (2) est monté selon un angle (A1) par rapport au premier élément de guidage (17), le deuxième élément de guidage (2) comprenant un deuxième dispositif de rail et un dispositif de glissière (28) relié au deuxième dispositif de rail, de préférence ledit angle (A1) est inférieur à 90 degrés.

11. Ensemble d'attelage de remorquage (1) selon la revendication 10, dans lequel le troisième élément de guidage (10) est monté selon un angle (A2) par rapport au premier élément de guidage (17), le troisième élément de guidage (10) comprenant un troisième dispositif de rail et un dispositif de glissière (29) relié au troisième dispositif de rail, de préférence le troisième élément de guidage (10) est monté sur le côté opposé du premier élément de guidage (17) par rapport au deuxième élément de guidage (2), de préférence ledit angle (A2) est inférieur à 90 degrés.

12. Véhicule porteur (15) tel que modifié par la fixation d'un ensemble d'attelage de remorquage (1) selon l'une quelconque des revendications précédentes.

13. Système de remorquage (60) comprenant un véhicule porteur (15) selon la revendication 12, et un véhicule tracteur (20), le véhicule porteur (15) comprenant deux roues pivotantes (16), de préférence quatre roues pivotantes, et le véhicule porteur (15) a une vitesse de déplacement limitée à 15 km / h, de préférence encore à 7 km / h, encore mieux à 3 km / h, et de préférence le véhicule porteur (15) a un poids total maximum de 400 kg, de préférence 200 kg, le système de remorquage (60) est en outre de préférence adopté pour une utilisation à l'intérieur uniquement, dans lequel le véhicule tracteur (20) présente un point haut (21) qui engage l'élément de connexion (9) de l'ensemble d'attelage de remorquage (1), si bien que le véhicule (20) dans son intégralité peut passer sous l'ensemble d'attelage de remorquage (1) pour engager l'élément de connexion (9), de préférence le point haut est une saillie (21), encore mieux le point haut est une goupille (21) qui est rétractable.
